# EUROPÄISCHE PATENTSCHRIFT

(11) **EP 2 170 679 B1**
(45) Veröffentlichungstag und Bekanntmachung des Hinweises auf die Patenterteilung: **17.11.2010**
(21) Anmeldenummer: 08758568.3
(22) Anmeldetag: 09.05.2008
(51) Int. Cl.: B62D 15/02, B60W 30/06

(54) **PARKLENKASSISTENZSYSTEM UND VERFAHREN ZUM UNTERSTÜTZEN EINES AUSPARKVORGANGS**
PARKING STEERING ASSISTANCE SYSTEM AND METHOD FOR ASSISTING THE PROCESS OF DRIVING OUT OF A PARKED POSITION
SYSTÈME D'ASSISTANCE À LA MANOEUVRE DE STATIONNEMENT ET PROCÉDÉ POUR FACILITER UNE MANOEUVRE DE SORTIE DE STATIONNEMENT

(30) Priorität: 22.06.2007 DE 102007029773
(43) Veröffentlichungstag der Anmeldung: 07.04.2010
(73) Patentinhaber: Volkswagen AG, 38436 Wolfsburg (DE)
(72) Erfinder: WIPPICH, André, 38440 Wolfsburg (DE); WUTTKE, Ulrich, 38126 Braunschweig (DE); KUHN, Thorsten, 38106 Braunschweig (DE)
(74) Vertreter: Obst, Bernhard
(86) Internationale Anmeldenummer: PCT/EP2008/003935
(87) Internationale Veröffentlichungsnummer: WO 2009/000373

(56) Entgegenhaltungen:
- DE-A1-102005 058 500

## Beschreibung

Die Erfindung betrifft ein Parklenkassistenzsystem und ein Verfahren zum Unterstützen eines Ausparkvorgangs eines Kraftfahrzeugs aus einer parallel zu einer Fahrbahn orientierten Parklücke. Ein solches Parklenkassistenzsystem unterstützt einen Fahrer beim Ausparken des Kraftfahrzeugs, wobei eine Unterstützung durch einen automatisierten Lenkeingriff bereitgestellt wird.

Moderne Kraftfahrzeuge verfügen häufig über Parkassistenzsysteme. Parkassistenzsysteme können verschiedene Assistenzfunktionen beinhalten. Die bekanntesten und am weitesten verbreiteten Parkassistenzsysteme sind reine Abstandswarnungssysteme, die auch als Park Distance Control - PDC bezeichnet werden. Die Unterstützung solcher Systeme liegt in einem Anzeigen eines Abstands von einem Hindernis und/oder einem Ausgeben einer Warnung, insbesondere einer optischen und/oder akustischen Warnung, bei einer Annäherung an ein Hindernis.

Aus der DE 199 33 732 A1 ist eine Ein- und Ausparkhilfe bekannt. Dort ist ein Verfahren zur Steuerung eines Ein-/Ausparkvorgangs eines Kraftfahrzeugs beschrieben, welches folgende Schritte aufweist: Erfassen eines Lenkwinkels, Erfassen der im Umfeld des Kraftfahrzeugs vorhandenen Gegenstände durch mindestens eine Abstandsmesseinrichtung, Auswertung des Lenkwinkels und der erfassten Gegenstände in einer Rechnereinheit und Berechnen der Fahrspur in Abhängigkeit des eingeschlagenen Lenkwinkels. Um den Benutzerkomfort eines derartigen Verfahrens für den Fahrer des Fahrzeugs zu erhöhen, ist dort vorgeschlagen, dass eine Signalvorrichtung dann von der Rechnereinheit zur Erzeugung eines Freisignals angesteuert wird, wenn der eingeschlagene Lenkwinkel ausreichend ist, um ein störungsfreies Fahren zu ermöglichen.

Aus der DE 10 2004 046 631 A1 sind ein Verfahren und ein System zur Unterstützung des Rangierens von Kraftfahrzeugen bekannt. Beschrieben ist ein Verfahren zur Unterstützung eines Park- oder Rangiervorgangs bei einem Kraftfahrzeug, wobei der Abstand des Kraftfahrzeugs zu im Umfeld des Kraftfahrzeugs vorhandenen Gegenständen durch mindestens eine Abstandsmesseinrichtung erfasst wird und ein Freigabesignal zur Signalisierung einer kollisionsfreien Fahrtmöglichkeit des Fahrzeugs und/oder ein Stoppsignal zur Signalisierung einer drohenden Kollision des Fahrzeugs erzeugbar ist, wobei das Freigabesignal dann erzeugt wird, wenn der Abstand zu erfassten Gegenständen so groß ist, dass bei maximalem Lenkeinschlag eine kollisionsfreie Fahrt des Kraftfahrzeugs an den erfassten Gegenständen vorbei möglich ist und/oder wobei das Stoppsignal dann erzeugt wird, wenn der Abstand zu mindestens einem erfassten Gegenstand so gering ist, dass auch bei maximalem Lenkeinschlag eine kollisionsfreie Fahrt des Kraftfahrzeugs an dem erfassten Gegenstand vorbei nicht möglich ist. Ferner ist ein System zur Unterstützung eines Park- und Rangiervorgangs bei einem Kraftfahrzeug beschrieben, mit dem das dort genannte Verfahren ausführbar ist.

Aus der Druckschrift DE 102 20 427 A1 ist ein Parkassistenzsystem bekannt, welches eine Größe einer Parklücke bestimmt, hieraus einen möglichen Einparkablauf für das Kraftfahrzeug errechnet und einem Fahrer Anweisungen gibt, in welche Richtung er ein Lenkrad einzuschlagen hat und wie er das Kraftfahrzeug zu beschleunigen oder zu bremsen hat. In der Druckschrift ist ferner eine Ausführungsform erwähnt, bei der der Fahrer die Lenkung betätigt und das Kraftfahrzeug selbstständig beschleunigt und/oder abbremst. Ferner ist eine Ausführungsform beschrieben, bei der das Kraftfahrzeug ohne einen Lenkeingriff und ohne einen Beschleunigungs- und/oder Bremseingriff vollautomatisch ein- oder ausgeparkt wird. Zusätzlich ist vorgesehen, dass der vorteilhafte Ein- und Ausparkablauf dem Fahrer visuell auf einem Anzeigegerät dargestellt wird.

Aus der Druckschrift DE 10 2005 058 500 A1 ist ein Fahrerassistenzsystem mit Sensoren zur Erfassung einer Parklücke und mit einer Auswerteeinheit zur Auswertung der von den Sensoren erfassten Informationen bekannt, wobei die Auswerteeinheit ausgebildet ist, einen Einparkvorgang und einen Ausparkvorgang eines Kraftfahrzeugs betreffende Hinweise und/oder Befehle zu erzeugen.

Parkassistenzsysteme, die ein Kraftfahrzeug vollautomatisch einparken, sind mit einigen Problemen verknüpft. Bei vollautomatisierten Vorgängen neigen Menschen dazu, ihre Kontrollpflichten nicht so streng zu befolgen, wie dieses geboten ist. So besteht die Gefahr, dass der Fahrer eines Kraftfahrzeugs, welches über ein Parkassistenzsystem zum vollautomatischen Einparken verfügt, seine Pflichten vernachlässigt, den Parkraum insbesondere auf Personen, die sich in den Parklückenbereich bewegen, zu überwachen. Ferner ist es zumindest für einen unerfahrenen Fahrer nicht einfach vorauszusagen, welche Fahrbewegungen das Kraftfahrzeug beim Einparken ausführen wird. Die Kontrollpflichten wahrzunehmen, wird hierdurch weiter erschwert. Dieses gilt auch dann, wenn der Einparkvorgang zuvor grafisch dargestellt wird. Eine Umsetzung einer grafischen Darstellung in die zu erwartende Fahrbewegung des Kraftfahrzeugs ist für viele Kraftfahrzeugführer gedanklich nicht einfach ausführbar. Um die Kontrollpflichten vollständig durch das Kraftfahrzeug wahrnehmen zu lassen, sind sehr aufwendige Sensorsysteme mit Redundanz und Diversität erforderlich, da insbesondere bewegliche Objekte von einem Kraftfahrzeug nur schwierig als solche erkannt werden. Wird ein bewegliches Objekt, beispielsweise ein sich bewegendes anderes Kraftfahrzeug, nicht als ein bewegendes Objekt erkannt, so besteht eine erhöhte Kollisionsgefahr. Daher werden heute Parkassistenzsysteme bevorzugt, bei denen der Fahrer aktiv an dem Einparkvorgang beteiligt ist, um hierdurch einen Anreiz, die Kontrollpflichten wahrzunehmen, zu erhöhen und dennoch den Fahrer von einem Teil der Aufgaben beim Ein- und/oder Ausparken zu entlasten.

Aus der nachveröffentlichten Patentanmeldung DE 102005061909 A1 ist ein semiautomatisches Parklenkassistenzsystem eines Kraftfahrzeugs zum Unterstützen eines Ausrichten eines Kraftfahrzeugs in einer Parklücke bekannt, welches Mittel zum Erfassen eines Aktivierungssignals, Mittel zum Ermitteln einer Änderungsrichtung, in der eine Ausrichtung des Kraftfahrzeugs verändert werden soll, Mittel zum Erfassen einer eingestellten Antriebsrichtung und eine Steuereinheit umfasst, die in einem aktiven Zustand des Parklenkassistenzsystems mindestens einen Aktor so steuert, dass lenkbare Räder des Kraftfahrzeugs maximal in Änderungsrichtung eingelenkt sind, wenn die eingestellte Antriebsrichtung vorwärts ist und die lenkbaren Räder maximal entgegen der Änderungsrichtung eingelenkt sind, wenn die eingestellte Antriebsrichtung rückwärts ist. Ein solches System unterstützt zwar einen Ausparkvorgang aus einer parallel zur Fahrbahn orientierten Parklücke vorteilhaft, jedoch wird durch das bekannte System nicht sichergestellt, dass ein Ausparkvorgang mit einer minimal benötigten Anzahl von Ausparkzügen erreicht wird.

Der Erfindung liegt die technische Aufgabe zugrunde, ein Parklenkassistenzsystem und ein Verfahren zu schaffen, mit denen ein Ausparkvorgang mit einer minimalen Anzahl von Parkzügen möglich ist.

Die Erfindung wird durch ein Parklenkassistenzsystem mit den Merkmalen des Patentanspruchs 1 sowie ein Verfahren mit den Merkmalen des Patentanspruchs 9 erfindungsgemäß gelöst. Vorteilhafte Ausgestaltungen der Erfindung ergeben sich aus den Unteransprüchen.

Die Erfindung beruht darauf, eine vorhandene Parklückengröße optimal auszunützen. Wird die Lenkung, wie bei der oben beschriebenen Vorrichtung bei einem ersten Ausparkzug, der in Rückwärtsfahrtrichtung ausgeführt wird, maximal entgegen der Ausparkrichtung eingeschlagen, so ist ein parallel zur Fahrbahn zurücklegbarer Lenkweg in Abhängigkeit von einem seitlichen Hindernisabstand des Kraftfahrzeugs am Beginn des Ausparkzuges zu einem die von der Fahrbahnseite abgewandten Seite der Parklücke begrenzenden Hindernis abhängig. Weist das Kraftfahrzeug beispielsweise einen seitlichen Abstand zu einem Bordstein von 0 cm auf, d.h. steht das Kraftfahrzeug mit seinem von der Fahrbahnseite abgewandten hinteren Rad direkt am Bordstein, so ist ein Rückwärtsfahrzug bei der bekannten Vorrichtung aus dem Stand der Technik nicht möglich. In der Regel beträgt ein Abstand zu einem seitlichen Bordstein jedoch mindestens 8 cm oder mehr. In einem solchen Fall kann das Kraftfahrzeug mit maximal entgegen der Ausparkrichtung eingelenkten Rädern zwar einen Lenkweg, der parallel zur Fahrbahn gemessen ist, zurücklegen, bis das von der Fahrbahnseite abgewandte hintere Rad an den Bordstein stößt, jedoch wird hierbei in der Regel nicht der gesamte in der Parklücke zur Verfügung stehende Raum ausgenutzt. Wird dieser optimal ausgenutzt, so kann eine Anzahl der benötigten Ausparkzüge minimiert werden. Zur Lösung der technischen Aufgabe wird daher ein Parklenkassistenzsystem für ein Kraftfahrzeug zum Unterstützen eines Ausparkvorgangs aus einer parallel zu einer Fahrbahn orientierten Parklücke vorgeschlagen, welches umfasst: Mittel zum Erfassen einer Systemaktivierung; Mittel zum Ermitteln einer beabsichtigten Ausparkrichtung; Mittel zum Erfassen einer eingestellten Fahrtrichtung; eine Steuereinheit zum Ansteuern mindestens eines Aktors in Abhängigkeit von der eingestellten Fahrtrichtung, wobei mit dem Aktor ein Lenkwinkel lenkbarer Räder des Fahrzeugs einstellbar ist, und mindestens ein Abstandsermittlungssystem, mit dem ein hinterer Hindernisabstand zu einem die Parklücke in Rückwärtsfahrtrichtung begrenzenden hinteren Hindernis messbar ist, wobei erfindungsgemäß mittels des mindestens einen Abstandsermittlungssystems oder eines weiteren Abstandsermittlungssystems ein seitlicher Hindernisabstand zu einem die Parklücke auf einer der Fahrbahn abgewandten Seite begrenzenden Seitenhindernis ermittelbar ist und die Steuereinheit ausgebildet ist, bei einem ersten Ausparkzug, sofern dieser in Rückwärtsfahrtrichtung ausgeführt ist, den Aktor so anzusteuern, dass die lenkbaren Räder zunächst für eine Parallelfahrt zu der Fahrbahn ausgerichtet sind, falls und solange der hintere Hindernisabstand unter Berücksichtigung einer hinteren Sicherheitsmarge länger als ein Lenkweg ist, und anschließend oder ansonsten eine maximale Einlenkung der lenkbaren Räder entgegen der Ausparkrichtung zu bewirken, wobei der Lenkweg der unter Berücksichtigung des seitlichen Hindernisabstands gegebenenfalls unter Berücksichtigung einer seitlichen Sicherheitsmarge bei Bewirkung der maximalen Einlenkung gegen die Ausparkrichtung zurücklegbare Abstand parallel zur Fahrbahn ist.

Es wird somit vorgeschlagen, eine Aktivierung des Parklenkassistenzsystems zu erfassen, eine Ausparkrichtung zu ermitteln und eine eingestellte Antriebsrichtung zu erfassen. Ferner wird ein hinterer Hindernisabstand zu einem die Parklücke in Rückwärtsfahrtrichtung begrenzenden hinteren Hindernis gemessen und der mindestens eine Aktor zum Einstellen des Lenkwinkels lenkbarer Räder des Kraftfahrzeugs abhängig von der eingestellten Fahrtrichtung angesteuert. Erfindungsgemäß ist vorgesehen, einen seitlichen Hindernisabstand zu einem die Parklücke auf einer der Fahrbahn abgewandten Seite begrenzenden seitlichen Hindernis zu ermitteln und einen Lenkweg zu bestimmen, der ein unter Berücksichtigung eines seitlichen Hindernisabstands gegebenenfalls unter Berücksichtigung einer seitlichen Sicherheitsmarge bei Bewirkung einer maximalen Einlenkung gegen die Ausparkrichtung zurücklegbarer Abstand parallel zur Fahrbahn ist, und bei einem ersten Ausparkzug, sofern dieser in Rückwärtsfahrtrichtung ausgeführt wird, der mindestens eine Aktor angesteuert wird, die lenkbaren Räder zunächst für eine Parallelfahrt zu der Fahrbahn auszurichten, falls und solange der hintere Hindernisabstand unter Berücksichtigung einer hinteren Sicherheitsmarge länger als der Lenkweg ist, und anschließend oder ansonsten eine maximale Einlenkung der lenkbaren Räder entgegen der Ausparkrichtung zu bewirken. Hierdurch wird der Vorteil erreicht, dass jeweils die gesamte Parklücke in rückwärtiger Richtung optimal ausgenutzt wird, um das Fahrzeug möglichst weit in einen hinteren Teil der Parklücke zu bewegen und zugleich eine maximal mögliche Richtungsänderung in Richtung der Ausparkrichtung des Kraftfahrzeugs zu bewirken. Hierdurch wird der für einen Vorwärtsausparkzug zur Verfügung stehende Raum vergrößert, so dass bei einem anschließenden Vorwärtsfahrzug eine größere Wegstrecke bei maximalem Lenkeinschlag in Ausparkrichtung zurückgelegt werden kann, so dass eine größere Richtungsänderung in Ausparkrichtung bewirkbar ist als bei Ausführungsformen nach dem Stand der Technik, bei denen der rückwärtig zur Verfügung stehende Raum im ersten Parkzug nicht ausgenutzt wird und somit auch für in Vorwärtsfahrtrichtung ausgeführte Ausparkzüge nicht zur Verfügung steht. Somit wird ohne eine Komforteinschränkung für den Fahrer ein schnellerer, aus weniger Ausparkzügen bestehender Ausparkvorgang ermöglicht.

Bei Kraftfahrzeugen, die lediglich in einem hinteren Stoßfänger angeordnete Ultraschallsensoren zum Ermitteln eines hinteren Hindernisabstands umfassen, ist im parkenden Zustand des Kraftfahrzeugs eine Erfassung des seitlichen Abstands des Kraftfahrzeugs, insbesondere wenn dieses ein Bordstein ist, nicht immer zuverlässig möglich.

Bei einer bevorzugten Ausführungsform der Erfindung ist daher vorgesehen, dass das Abstandsermittlungssystem einen Speicher umfasst, in dem Abstandsdaten, die bei einem Einparkvorgang erhoben werden, abspeicherbar sind und der seitliche Hindernisabstand anhand der bei einem vorausgegangenen Einparkvorgang erhobenen und in dem Speicher abgelegten Abstandsdaten ermittelt wird. Während des Einparkvorgangs kann die Bordsteinkante als Hindernis häufig erfasst werden und können die hierbei gewonnenen Daten bzw. hieraus ermittelte Abstände als Abstandsdaten in dem Speicher abgelegt werden. Da sich ein seitlicher Abstand während des Parkens nicht ändert, kann auf diese Daten zum Ausparken zurückgegriffen werden.

Bei Systemen, bei denen eine Messung des seitlichen Hindernisabstands nicht möglich ist und/oder keine in dem Speicher abgelegten Abstandsdaten aus dem vorherigen Einparkvorgang zur Verfügung stehen, kann der seitliche Hindernisabstand mittels eines Schätzens anhand statistischer Abstandsdaten erfolgen. Erfahrungswerte zeigen, dass Kraftfahrzeuge in 99 % aller Fälle mit einem Abstand von mehr als 8 cm zu einem Bordstein beim Parken abgestellt werden und hierbei maximal eine Ausrichtung von 5° gemessen zwischen einer seitlichen Begrenzung der Parklücke und einer Längsachse des Kraftfahrzeugs aufweisen. Der seitliche Hindernisabstand kann somit anhand einer Schätzung aus statistischen Abstandsdaten ermittelt werden. Um eine optimale Anpassung an die Parkgewohnheiten eines Fahrers vorzunehmen, können bei Einparkvorgängen ermittelte Abstandsdaten statistisch ausgewertet werden und als Schätzung verwendet werden.

Um eine Anzahl benötigter Bedienelemente in dem Kraftfahrzeug gering zu halten, ist es von Vorteil, wenn die Mittel zum Erfassen des Aktivierungssignals ein Bedienelement zum Aktivieren eines Einparkassistenzsystems umfassen. Ein Ausparken aus einer parallel zur Fahrbahn orientierten Parklücke erfolgt nur, wenn das Fahrzeug zuvor in eine solche eingeparkt wurde. In der Regel wird das Ausparken nach einer längeren Phase des Stillstands des Kraftfahrzeugs stattfinden. Somit kann das Bedienelement, welches eine Aktivierung eines Einparkassistenzsystems bewirkt, auch zum Aktivieren des Parklenkassistenzsystems zum Ausparken des Fahrzeugs verwendet werden.

Grundsätzlich ist es zwar möglich, anhand eines zuvor erfolgten Einparkvorgangs auch auf eine Ausparkrichtung zu schließen. Grundsätzlich wird dies fast immer die Fahrerseite des Kraftfahrzeugs sein, da Parklücken am Fahrbahnrand in Fahrtrichtung auf der Beifahrerseite der Fahrbahn angeordnet sind. Lediglich in Einbahnstraßen ist auch ein Einparken auf der Fahrerseite vorgesehen. Um auch zuverlässig solche Fälle oder Situationen, in denen ein Kraftfahrzeug im Ausland bewegt wird, in dem das Fahrzeug auf der Fahrerseite der Fahrbahn in Fahrtrichtung bewegt wird, die Ausparkrichtung erfassen zu können, ist bei einer bevorzugten Ausführungsform der Erfindung vorgesehen, dass die Mittel zum Erfassen der Ausparkrichtung eine Korrelation eines bei einer Betätigung eines Bedienelements zum Aktivieren des Parkassistenzsystems erfassten Signals und eines bei einer Betätigung eines Blinkerbedienelements erfassten Blinkrichtungssignals auswertet und die Ausparkrichtung anhand des Blinkrichtungssignals ermittelt. Wird also ein Blinkerbedienelement zeitlich korreliert mit einem Bedienelement zum Aktivieren des Ausparkassistenzsystems betätigt, so wird anhand der gewählten Blinkerstellung des Bedienelements die Ausparkrichtung festgelegt. Hierbei kann das Setzen des Blinkers zeitlich vor dem Betätigen des Parklenkassistenzsystems zum Ausparken oder zeitlich nach der Aktivierung dieses Parklenkassistenzsystems erfolgen. Lediglich in Situationen, in denen beispielsweise bei Inbetriebnahme der Zündung des Kraftfahrzeugs das Blinkerbedienelement in einer ein Blinken auslösenden Stellung positioniert ist und somit eine Blinkeraktivierung nicht zeitlich im unmittelbaren Zusammenhang mit dem Starten des Kraftfahrzeugs und einem gegebenenfalls anschließenden Aktivieren des Parklenkassistenzsystems erfolgt ist, soll anhand der Stellung des Blinkerbedienelements die Ausparkrichtung nicht ermittelt werden, da diese unzuverlässig ist. Gegebenenfalls zeigt die Blinkerbedienelementstellung nämiich die Richtung an, die signalisiert wurde, um in die Parklücke einzuparken. Diese ist dann entgegengesetzt zu der gewünschten Ausparkrichtung. Unter der Blinkerbedienelementstellung wird nicht nur eine mechanische Stellung verstanden. Blinkerbedienelemente, die als Tastbedienelemente ausgebildet sind und nicht in einer Blinkerstellung mechanisch einrasten, weisen ebenfalls eine Bedienelementstellung auf, die durch das erzeugte Richtungssignal des Bedienelements angegeben ist.

Eine Blinkerfunktion ist häufig von einer Stellung der Lenkung abhängig. Hierdurch wird erreicht, dass ein gesetzter Blinker nach einem Ausführen einer entsprechenden Fahrtrichtungsänderung automatisch zurückgesetzt wird. Beim Rangieren des Kraftfahrzeugs während des Ausparkens wird somit bei Kraftfahrzeugen im Stand der Technik eine einmal gesetzte Blinkerfunktion häufig aufgrund einer während des Rangiervorgangs auftretenden Lenkungsstellung bzw. Lenkungsstellungsänderung wieder deaktiviert. Um jedoch sicherzustellen, dass während des Ausparkvorgangs die Blinkerfunktion beim Ausparken immer korrekt die Richtungsänderungsabsicht anzeigt, ist das Parklenkassistenzsystem vorzugsweise so ausgebildet, dass eine Blinkerfunktion unabhängig von einer Lenkungsstellung während eines Ausparkvorgangs bis zum Erreichen einer Abbruchsbedingung aufrecht erhalten wird. Ein Überschreiten einer Schwellengeschwindigkeit von beispielsweise 15 km/h kann als Abbruchbedingung verwendet werden. In der Regel wird es unterschiedliche Abbruchbedingungen geben.

Als besonders vorteilhaft haben sich Ausführungsformen der Erfindung erwiesen, bei denen seitlich an dem Fahrzeug ein oder mehrere Abstandssensoren zum Erfassen des seitlichen Hindernisabstands angeordnet sind. Eine Messung ist zuverlässiger als eine Schätzung und auch zuverlässiger als eine Ermittlung des seitlichen Abstands anhand von Abstandsinformationen, die während eines zuvor erfolgten Einparkvorgangs erhoben, ausgewertet und/oder abgespeichert wurden. Beispielsweise kann sich der seitliche Abstand einer Begrenzung während des Parkens verändert haben, beispielsweise wenn die seitlichen Hindernisse ebenfalls eingeparkte Fahrzeuge sind, die beispielsweise in senkrecht zu der Parallelparklücke orientierten Parkboxen eingeparkt sind, welche von einer anderen Fahrbahn, die parallel zu der einen Fahrbahn orientiert ist, befahrbar sind.

Das Parklenkassistenzsystem ist vorzugsweise so ausgestaltet, dass ein Fahrer die Parklenkassistenzfunktion jederzeit beenden kann. Beispielsweise kann vorgesehen sein, dass das Parklenkassistenzsystem über das Bedienelement deaktivierbar ist, über das auch eine Aktivierungshandlung erfassbar ist. Ferner kann das Parklenkassistenzsystem durch ein Rücksetzen der Blinkerfunktion oder ein Überschreiten einer Schwellengeschwindigkeit, beispielsweise von 15 km/h, vorgesehen sein. Ferner kann es vorteilhaft sein, das Parklenkassistenzsystem zu deaktivieren, wenn der Fahrer aktiv in die Lenkung eingreift. Um dem Fahrer in jeder Situation während des Ausparkvorgangs als auch unmittelbar nach einer Beendigung und/oder Deaktivierung des Parklenkassistenzsystems die Möglichkeit zu geben, sich über eine aktuelle Stellung der lenkbaren Räder zu informieren, ist bei einer bevorzugten Ausführungsform vorgesehen, dass die Steuereinrichtung mit einer Anzeige gekoppelt ist, auf der eine Lenkungsstellung der Räder grafisch dargestellt ist. Für einen Fahrer reicht hierbei in der Regel eine schematische Anzeige aus, in der unterschiedliche Lenkungsstellung grob skizziert werden. Beispielsweise kann bezogen auf eine Winkeländerung eines Lenkrads, die zum Erreichen einer Lenkungsstellung erforderlich ist, eine Gruppierung der Lenkungsstellungen in mehrere Stellungsbereiche, vorzugsweise fünf Bereiche, vorgenommen werden. Bei am Lenkrad vorzunehmenden Winkeländerungen, bezogen auf eine Geradeausfahrt von +/- 60°, werden die Fahrzeugräder als in Geradeausfahrt befindlich dargestellt. In einem Winkelbereich zwischen 60° und 360° bzw. - 60° und -360° werden die Räder als leicht nach rechts bzw. leicht nach links eingelenkt dargestellt. Bei Stellungen der Lenkung, für deren Erreichen mindestens eine volle Lenkradumdrehung nach rechts oder links auszuführen ist, werden die Räder als maximal eingelenkt nach rechts bzw. links grafisch dargestellt. Hierdurch ist es für den Fahrer einfach möglich, jederzeit die Stellung der lenkbaren Räder zu verfolgen. Hierdurch ist der Fahrer jederzeit in der Lage vorauszusehen, welche Bewegung das Fahrzeug ausführen wird, wenn er dieses beschleunigt und hierüber in Bewegung setzt. Nach einem Abbruch des Ausparkvorgangs ist der Fahrer darüber informiert, wie er die Stellung der Räder zu verändern hat, um die Fahrt in einer gewünschten Richtung aufzunehmen oder fortzusetzen. Es ergibt sich, dass auch mehr oder weniger als fünf Stellungsbereiche, beispielsweise sieben oder neun Stellungsbereiche, verwendet werden können.

Die Merkmale des erfindungsgemäßen Verfahrens weisen dieselben Vorteile wie die entsprechenden Merkmale des erfindungsgemäßen Parklenkassistenzsystems auf.

Nachfolgend wird die Erfindung anhand eines bevorzugten Ausführungsbeispiels unter Bezugnahme auf eine Zeichnung näher erläutert. Hierbei zeigen:
- Fig. 1: eine schematische Darstellung eines Kraftfahrzeugs in einer Parallelparklücke vor einem ersten Ausparkzug;
- Fig. 2: eine Darstellung des Kraftfahrzeugs nach Fig. 1 nach einem ersten Ausparkzug mit einem Parklenkassistenzsystem nach dem Stand der Technik;
- Fig. 3: eine grafische Darstellung der Abhängigkeit eines zurücklegbaren Lenkwegs und eines erreichbaren Fahrzeugwinkels relativ zu einer seitlichen Begrenzung einer Parklücke jeweils in Abhängigkeit von einem seitlichen Hindernisabstand;
- Fig. 4: eine schematische Darstellung des Kraftfahrzeugs nach Fig. 1 während eines ersten Ausparkzuges gemäß einer vorteilhaften Ausführungsform eines Parklenkassistenzsystems;
- Fig. 5: das Kraftfahrzeug nach Fig. 1 in der Parklücke am Ende eines ersten Ausparkzuges mit einem vorteilhaften Parklenkassistenzsystem;
- Fig. 6-10: Ansichten einer Anzeigefläche zum Veranschaulichen der grafischen Darstellung einer Stellung der lenkbaren Räder; und
- Fig. 11: eine schematische Darstellung eines Kraftfahrzeugs mit einem Parklenkassistenzsystem.

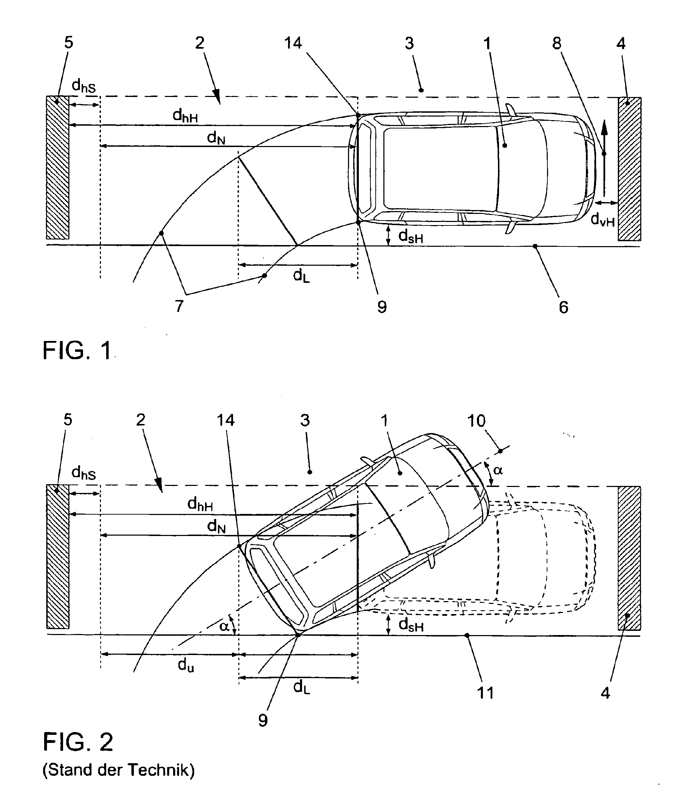

In Fig. 1 ist schematisch ein Kraftfahrzeug 1 in einer Parklücke 2 dargestellt. Die Parklücke 2 ist zu einer Fahrbahn 3 offen. Nach vorne ist die Parklücke 2 durch ein vorderes Hindernis 4 begrenzt. Angaben wie vorne, hinten und seitlich beziehen sich jeweils auf eine Orientierung des Kraftfahrzeugs 1. Ein in Vorwärtsfahrtrichtung des Kraftfahrzeugs 1 vorne befindliches Hindernis wird als vorderes Hindernis 4 bezeichnet. Nach hinten ist die Parklücke demnach durch ein hinteres Hindernis 5 begrenzt. An der der Fahrbahn 3 abgewandten Seite der Parklücke 2 ist die Parklücke durch ein seitliches Hindernis 6, welches beispielsweise ein Bordstein ist, begrenzt. Das vordere Hindernis 4 und das hintere Hindernis 5 sind in der Regel Kraftfahrzeuge. Es kann sich jedoch bei diesen auch um beliebige andere Gegenstände handeln. Das Kraftfahrzeug 1 ist in Fig. 1 in einer Ausgangsposition vor einem ersten Ausparkzug dargestellt. Hierbei weist das Kraftfahrzeug 1 einen hinteren Hindernisabstand d_{hH} von dem hinteren Hindernis 5 auf. Berücksichtigt man eine hintere Sicherheitsmarge d_{hS}, so verbleibt ein nutzbarer hinterer Hindernisabstand d_{N}, den das Kraftfahrzeug 1 bei einem Ausparkzug aus der Parklücke 2 verwenden kann.

Ferner weist das Kraftfahrzeug 1 einen seitlichen Hindernisabstand d_{sH} zu dem seitlichen Hindernis 6 auf. In Fig. 1 ist zusätzlich ein Fahrschlauch 7 angedeutet, den das Kraftfahrzeug durchfahren würde, wenn es aus der Ausgangsstellung bei maximal zu dem seitlichen Hindernis 6 hin eingelenkten lenkbaren Vorderrädern rückwärts bewegt würde. Ein Einlenken der vorderen lenkbaren Vorderräder zu dem seitlichen Hindernis 6 ist ein Einlenken entgegen einer Ausparkrichtung, die zu der Fahrbahn 3 hinweist und mittels eines Pfeils 8 angedeutet ist.

In Fig. 2 ist die Parklücke 2 nach Fig. 1 dargestellt. Dargestellt ist die Situation, in der sich das Kraftfahrzeug 1 befinden würde, wenn es aus der Grundstellung oder Ausgangsstellung nach Fig. 1, die in Fig. 2 gestrichelt dargestellt ist, bei maximal entgegen der Ausparkrichtung eingelenkten Rädern zurückgesetzt worden wäre. Hierbei ist das Kraftfahrzeug 1 soweit bei maximalem Lenkeinschlag entgegen der Ausparkrichtung zurückgesetzt worden, bis eine hintere von der Fahrbahnseite abgewandte Ecke 9 einen minimal vorgegebenen Abstand von dem seitlichen Hindernis 5 unter Berücksichtigung von gegebenenfalls einer seitlichen Sicherheitsmarge erreicht hat. Im dargestellten Beispiel ist die seitliche Sicherheitsmarge gleich null gewählt. In der erreichten Stellung weist eine Fahrzeuglängsachse 10 einen Ausrichtungswinkel α gegenüber einer seitlichen Begrenzung bzw. einer Ausrichtung der Fahrbahn 3 auf. Bei einem ersten Ausparkzug, wie er mittels Fig. 2 dargestellt ist und im Stand der Technik beschrieben ist, wurde von dem nutzbaren Hindernisabstand d_{N} nur ein so genannter Lenkweg d_{L} genutzt. Der Lenkweg oder Lenkabstand ist der Abstand, um den das Fahrzeug parallel zur Fahrbahn während der Bewirkung eines maximalen Lenkeinschlags parallel zur Fahrbahn bewegt wird. Der Lenkweg wird somit parallel zur Ausrichtung der Fahrbahn (Fahrbahnrichtung) gemessen. Wird der Lenkeinschlag nicht im ruhenden Zustand ausgeführt, so vergrößert sich der Lenkweg, je höher die Geschwindigkeit während des Vorgangs des Einlenkens bis zum Erreichen einer maximalen Einlenkung ist. Die Differenz zwischen dem nutzbaren Hindernisabstand d_{N} und dem Lenkweg d_{L} ist ein unbenutzter Hindernisabstand d_{U}.

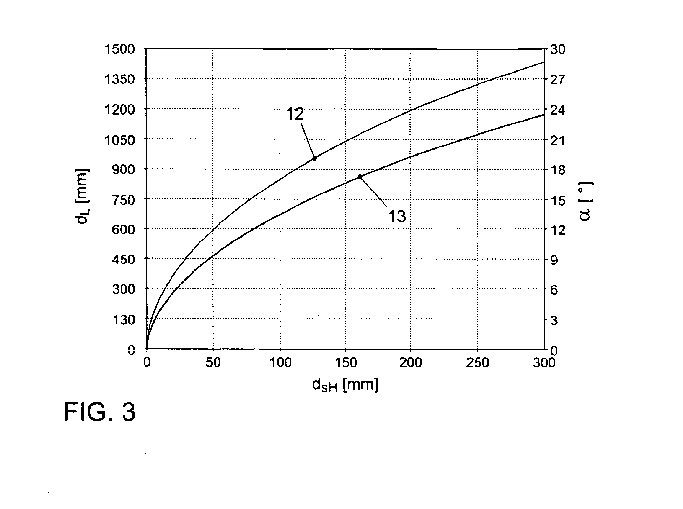

In Fig. 3 ist der Zusammenhang zwischen dem Lenkweg (linke Ordinatenachse) und dem seitlichen Hindernisabstand (Abszissenachse) in der Ausgangsstellung mittels einer oberen Kurve 12 dargestellt. Eine untere Kurve 13 gibt den erreichbaren Ausrichtwinkel α (rechte Ordinatenachse) in Abhängigkeit von dem seitlichen Hindernisabstand (Abszissenachse) in der Ausgangsstellung des Kraftfahrzeugs 1 in der Parklücke 2 an. Hierbei ist jeweils vorausgesetzt, dass die lenkbaren Räder des Kraftfahrzeugs 1 maximal entgegen der Ausparkrichtung eingelenkt sind, während das Kraftfahrzeug 1 sich in Ruhe befindet, d.h. maximal eingelenkt sind, bevor das Kraftfahrzeug 1 rückwärts bewegt wird. Gut zu erkennen ist, dass der Lenkweg als auch der Ausrichtwinkel α, welcher erreichbar ist, mit einem zunehmenden seitlichen Hindernisabstand ebenfalls zunehmen. Dies bedeutet, je weiter das Kraftfahrzeug 1 von dem seitlichen Hindernis 6 entfernt ist, d.h. je größer der seitliche Hindernisabstand d_{sH} ist, desto größer ist der Lenkweg, d.h. der Weg, der von dem nutzbaren Hindernisabstand d_{N} ausgenutzt wird. Um diesen nutzbaren Hindernisabstand d_{N} optimal auszunutzen, ist erfindungsgemäß vorgesehen, dass das Fahrzeug zunächst über eine Parallelfahrstrecke d_{P} parallel zur Fahrbahn 3 bzw. seitlichen Begrenzung 11 der Parklücke 2 bewegt wird, bis der dann verbleibende nutzbare Hindernisabstand dem Lenkweg d_{L} entspricht.

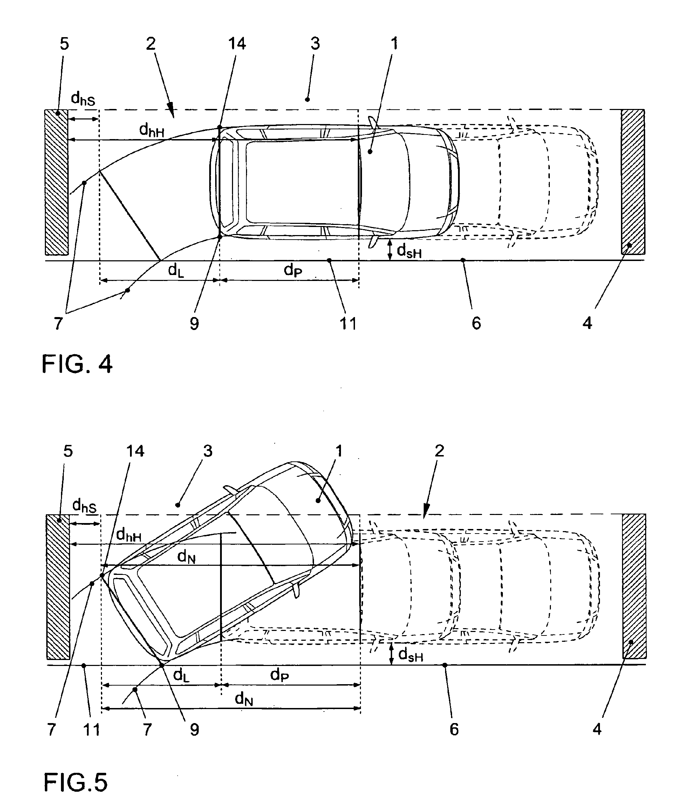

In Fig. 4 ist das Kraftfahrzeug 1 in der Stellung gezeigt, in der es sich nach dem Durchfahren der Parallelfahrstrecke d_{P} befindet. Gegenüber der Ausgangsstellung hat es die Parallelfahrstrecke d_{P} zurückgelegt.

In Fig. 5 ist schließlich die Stellung des Kraftfahrzeugs 1 dargestellt, in der sich das Kraftfahrzeug befindet, nachdem es nach dem Durchfahren der Parallelfahrstrecke d_{P} mit maximalem Lenkeinschlag der lenkbaren Räder entgegen der Ausparkrichtung in Rückwärtsfahrrichtung bewegt wurde. Die hintere von der Fahrbahnseite abgewandte Ecke 9 weist in dieser Stellung einen Abstand auf, der der seitlichen Sicherheitsmarge entspricht, die im dargestellten Beispiel gleich null gewählt ist. Eine der Fahrbahnseite 3 zugewandte andere Ecke 14 weist von dem hinteren Hindernis die hintere Sicherheitsmarge d_{hS} auf. Der Ausrichtwinkel α des Kraftfahrzeugs 1 am Ende des ersten Ausparkzugs entspricht zwar dem Ausrichtwinkel α nach Fig. 2, in der das Kraftfahrzeug nach einem Ausparkverfahren nach dem Stand der Technik ausgeparkt ist, jedoch steht für nachfolgende Ausparkzüge in Vorwärtsfahrtrichtung des Fahrzeugs mehr Raum in der Parklücke zur Verfügung, so dass bei auf den ersten Ausparkzug folgenden Ausparkzügen jeweils eine größere Ausrichtwinkeländerung Δα erreichbar ist, bevor der Ausparkzug durch das vordere Hindernis 4 begrenzt wird. Das Ausparken mittels eines Parklenkassistenzsystems, welches in Bezug auf die Fig. 1, 4 und 5 beschrieben ist, erweist sich jeweils dann als überlegen, wenn der nutzbare Hindernisabstand d_{N} in der Ausgangsstellung vor einem ersten Ausparkzug größer als der Lenkweg d_{L} ist, den das Kraftfahrzeug 1 bezogen auf den seitlichen Hindernisabstand d_{sH} in der Ausgangsstellung aufweist. Es ergibt sich für den Fachmann, dass das Parklenkassistenzsystem zum Ausparken des Kraftfahrzeugs 1 für den Fall, dass ein vorderer Hindernisabstand d_{vH} ausreichend ist, um das Kraftfahrzeug einzügig vorwärts aus der Parklücke auszuparken, dem Fahrer als eine Empfehlung ausgeben wird, das Kraftfahrzeug in Vorwärtsfahrtrichtung auszuparken. In den übrigen Fällen ist es meist vorteilhaft, den ersten Ausparkzug in Rückwärtsfahrtrichtung zu beginnen, wie dies oben beschrieben ist. Ist in der Ausgangsstellung der nutzbare Hindernisabstand größer oder gleich dem Lenkweg d_{L}, so werden die lenkbaren Räder vor dem Beginn oder am Beginn des ersten Rückwärtsausparkzugs maximal entgegen der Ausparkrichtung eingelenkt.

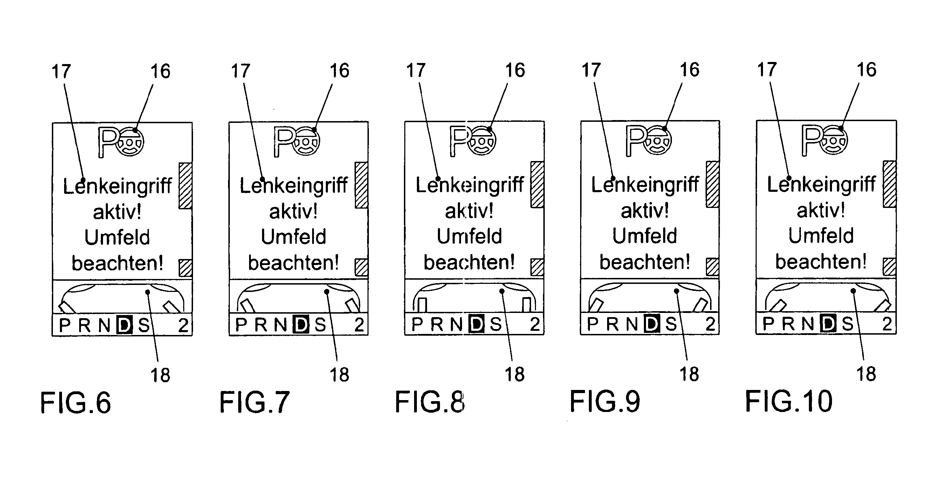

In den Fig. 6 bis 10 ist eine Ansicht einer Anzeigefläche, beispielsweise einer Anzeigefläche in einem Kombiinstrument, dargestellt. In einem oberen Bereich ist ein Parklenkassistentensymbol 16 dargestellt, welches darauf hinweisen soll, dass das Parklenkassistenzsystem aktiv ist. In einem mittleren Bereich sind Warnnachrichten 17 dargestellt, die vorzugsweise alphanumerisch ausgestaltet sind. Im dargestellten Fall lauten die Warnhinweise "Lenkeingriff aktiv! Umfeld beachten!". Der Fahrer wird darauf hingewiesen, dass das Kraftfahrzeug selbstständig in die Lenkung eingreift und wird zusätzlich aufgefordert, das Umfeld selbstständig aktiv zu überwachen. Darunter ist schematisch ein Vorderteil 18 des Kraftfahrzeugs schematisch dargestellt. Ferner sind lenkbare Räder 15 ebenfalls schematisch entsprechend ihrer jeweils aktuellen Stellung dargestellt. Die Anzeigevorrichtung kann so ausgestaltet sein, dass mit ihr lediglich eine begrenzte Anzahl von unterschiedlichen Positionen der lenkbaren Räder 15 darstellbar sind. Im dargestellten Beispiel sind dies fünf unterschiedliche Stellungen in den Fig. 6 bis 10. In Fig. 6 ist eine Lenkungsstellung dargestellt, die man erhält, wenn man das Lenkrad des Kraftfahrzeugs aus einer Geradeausstellung um mehr als 360° nach links dreht. In Fig. 7 ist eine Lenkungsstellung schematisch dargestellt, die man erhält, wenn man von einer Geradeausfahrt ausgehend das Lenkrad um mindestens 60° nach links, jedoch höchstens 360° nach links dreht. In Fig. 8 ist eine Lenkungsstellung schematisch dargestellt, die man erhält, wenn man das Lenkrad aus einer Geradeausstellung um maximal 60° nach links oder 60° nach rechts dreht. Fig. 9 und 10 enthalten die zu den Fig. 7 und 6 korrespondierenden Ansichten, die man erhält, wenn man das Lenkrad aus der Geradeausfahrt um mindestens 60°, jedoch höchstens 360° bzw. um mehr als 360° nach rechts dreht. In einem unteren Randbereich der Anzeigefläche ist jeweils die Stellung des Fahrstufenwahihebeis schematisch dargestellt. Es ist jeweils die Fahrstufe "D" für normale Vorwärtsfahrt gewählt.

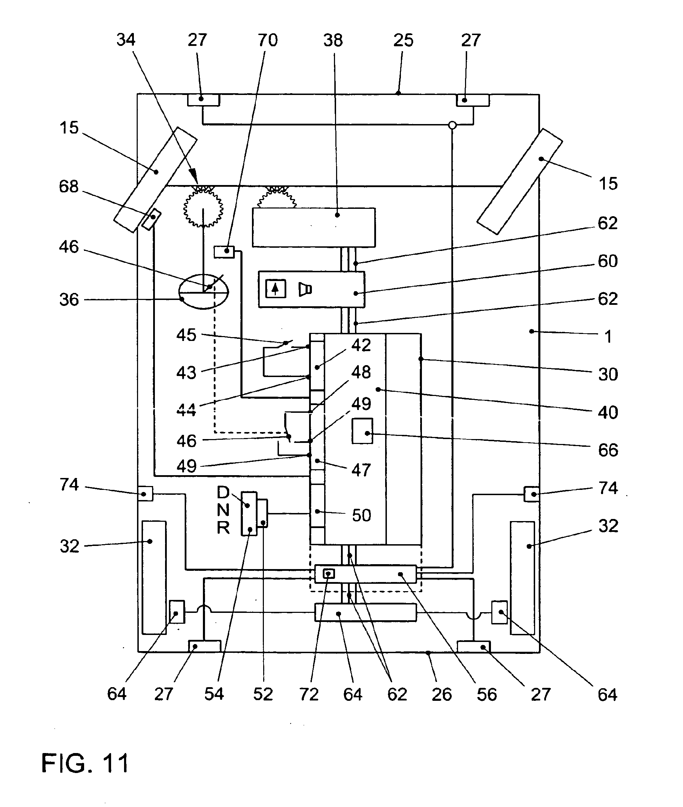

In Fig. 11 ist schematisch ein Kraftfahrzeug 1 mit einem Parklenkassistenzsystem 30 zum Unterstützen eines Ausparkvorgangs dargestellt. Das Kraftfahrzeug 1 umfasst Hinterräder 32 und lenkbare Vorderräder 15. Die lenkbaren Vorderräder 15 können über ein Lenkungssystem 34, das ein Lenkrad 36 umfasst, eingelenkt werden. Zusätzlich können die lenkbaren Vorderräder 15 über einen Aktor 38 eingelenkt werden. Der Aktor 38 kann von einer Steuereinheit 40 des Parklenkassistenzsystems 30 gesteuert werden. Bei dem Aktor 38 kann es sich um ein Element des Lenkungssystems 34 handeln, das beispielsweise verwendet wird, um eine Lenkbewegung des Lenkrads 36 zu unterstützen. Das Parklenkassistenzsystem 30 umfasst Mittel zum Erfassen eines Aktivierungssignals 42. Diese umfassen einen Eingang 43 und einen Ausgang 44. Der Eingang 43 und der Ausgang 44 sind über einen Schalter 45 verbunden. Wird der Schalter 45 geschlossen, so wir eine elektrische Verbindung zwischen dem Eingang 43 und dem Ausgang 44 ausgebildet. Auf diese Wiese empfangen die Mittel zum Empfangen eines Aktivierungssignals 42 ein Aktivierungssignal und aktivieren das Parklenkassistenzsystem 30. Der Schalter 45 stellt ein Bedienelement dar, das auch zum Aktivieren eines weiteren Parklenkassistenzsystems zum Unterstützen eines Einparkvorgangs verwendbar ist. Dieses weitere Parklenkassistenzsystem kann in das Parklenkassistenzsystem 30 zum Unterstützen eines Ausparkvorgangs integriert sein.

Über einen Blinkerhebel 46, der von einem Fahrer betätigt wird, kann eine Ausparkrichtung eingestellt werden, die vorgibt, in welche Richtung das Kraftfahrzeug 1 mit Hilfe des Parklenkassistenzsystems 30 ausgeparkt werden soll. Der Blinkerhebel 46 ist mit Mitteln zum Ermitteln der Ausparkrichtung 47 verbunden. In der dargestellten Ausführungsform sind die Mittel zum Ermitteln der Ausparkrichtung 47 so ausgestaltet, dass sie einen weiteren Ausgang 48 und zwei weitere Eingänge 49 aufweisen. Wird der Blinkerhebel 46 betätigt, wird eine elektrische Verbindung zwischen dem weiteren Ausgang 48 und einem der weiteren Eingänge 49 ausgebildet. Je nach dem, an welchem der weiteren Eingänge 49 ein Signal erfasst wird, wird die Ausparkrichtung festgelegt. Bei anderen Ausführungsformen können die Mittel zum Ermitteln der Ausparkrichtung auch Signale unterschiedlicher Sensoren und/oder Informationen unterschiedlicher Steuergeräte des Kraftfahrzeugs auswerten, um anhand vorgegebener Kriterien selbstständig automatisch zu ermitteln, in welche Richtung ausgeparkt werden soll. Verfügt das Kraftfahrzeug beispielsweise zusätzlich über eine Einparkhilfe, die das Kraftfahrzeug einzügig in eine parallele Parklücke rückwärts einparken kann, so können Informationen dieser Parkhilfe verwendet werden, um die Ausparkrichtung zu ermitteln. Wird das Parklenkassistenzsystem aktiviert, nachdem das Kraftfahrzeug geparkt war, so kann die Ausparkrichtung in der Regel aus den Daten über den zuvor erfolgten Einparkvorgang abgeleitet werden. Wurde das Kraftfahrzeug beispielsweise beim Einparken in eine parallele Parklücke am rechten Fahrbahnrand rückwärts eingeparkt, so war beim Einparkvorgang die Änderungsrichtung rechts. Zum Ausparken muss nun folglich die Ausparkrichtung links sein. Vorteilhafterweise wird jedoch das Signal eines Blinkersteuergeräts in zeitlicher Korrelation mit einer Aktivierung des Parklenkassistenzsystems 30 genutzt.

Mittel zum Erfassen einer eingestellten Antriebsrichtung 50 sind mit einem Sensor 52 an einem Wahlhebel 54 eines Automatikgetriebes gekoppelt. Der Sensor 52 erfasst die Stellung des Wahlhebels 54. Das Kraftfahrzeug 1 verfügt ferner über ein Abstandsermittlungssystem 56. Das Abstandsermittlungssystem 56 umfasst Abstandssensoren 27, die an einem vorderen Ende 25 und an einem hinteren Ende 26 des Kraftfahrzeugs 1 angeordnet sind. Das Abstandsermittlungssystem 56 ermittelt Hindernisabstände d_{vH}, d_{hH} von Gegenständen, die die Parklücke begrenzen, aus der das Kraftfahrzeug ausgeparkt werden soll. Die Steuereinheit 40 ist so ausgestaltet, dass sie Abstandsinformationen des Abstandsermittlungssystems 56 empfangen und auswerten kann. Anhand der empfangenen Abstandsinformationen ermittelt die Steuereinheit 40 eine Fahrtrichtungsempfehlung, in der das Kraftfahrzeug 1 beim Rangieren zum Ausparken des Kraftfahrzeugs 1 bevorzugt bewegt werden soll. Ist der hintere Hindernisabstand d_{hH} gleichgroß oder größer als der vordere Hindernisabstand d_{vH}, so ist in der Regel ein Rückwärtsausparkzug als erster Ausparkzug vorteilhaft. Aber auch in Situationen, in denen der hintere Hindernisabstand eine Schwellengröße überschritten hat, sollte ein erster Ausparkzug rückwärts ausgeführt werden. Ist der vordere Hindernisabstand dᵥₕ jedoch sehr viel größer als der hintere Hindernisabstand dₕₕ, so ist ein Beginnen des Ausparkens in Vorwärtsrichtung vorteilhaft. Eine Antriebsrichtungsempfehlung wird somit vorteilhafterweise anhand einer Gewichtung des vorderen Hindernisabstands d_{vH}, des hinteren Hindernisabstands d_{hH} und des seitlichen Hindernisabstands d_{sH} errechnet. Folglich stellt die Steuereinheit 40 eine Antriebsrichtungsempfehlung zur Verfügung, die über eine Ausgabeeinheit 60 ausgegeben wird. Die Ausgabeeinheit 60 kann eine beliebige audiovisuelle Ausgabeeinheit sein. Die Ausgabeeinheit 60 ist über ein Fahrzeugbussystem 62 mit der Steuereinheit 40 des Parklenkassistenzsystems 30 informationstechnisch ebenso wie der Aktor 38 und die Abstandsermittlungseinheit 56 verbunden. Die Steuereinheit 40 steuert ferner den Aktor 38 in Abhängigkeit von der erfassten eingestellten Antriebsrichtung und der ermittelten Änderungsrichtung. Während des Rangierens kann die Ausgabe einer Antriebsrichtungsempfehlung geschwindigkeitsabhängig ausgestaltet sein. Bewegt sich das Fahrzeug schnell, so wird eine größere Strecke während der Reaktionszeit des Fahrers zurückgelegt, so dass die Antriebsrichtungsempfehlung, die eine Fahrtrichtungsänderung vorschlägt, zeitlich früher ausgegeben werden sollte als bei langsamer Fahrzeugbewegung.

Um zu vermeiden, dass das Kraftfahrzeug 1 an das vordere oder hintere Hindernis der Parklücke anstößt, ist die Steuereinheit 40 mit einer Bremsanlage 64 über das Fahrzeugbussystem 62 gekoppelt. Ermittelt die Steuereinheit 40 mittels eines Vergleichers 66 anhand der Abstandsinformationen, dass ein Abstand zu einem Gegenstand, der die Parklücke begrenzt, eine Sicherheitsmarge (beispielsweise die seitliche Sicherheitsmarge d_{sS} oder die hintere Sicherheitsmarge d_{hS}) unterschreitet, so kann die Steuereinheit 40 zum einen eine Warnung über die Ausgabeeinheit 60 ausgeben und/oder zum andern aktiv die Bewegung des Kraftfahrzeugs 1 über die Bremsanlage 64 bremsen. Ferner kann vorgesehen sein, dass die Steuereinheit den Aktor 38 zum Bewirken eines maximalen Einlenkens der Vorderräder 15 nur steuern kann, wenn das Kraftfahrzeug 1 gebremst ist. Ein Radimpulssensor 68 liefert eine Geschwindigkeitsinformation an die Steuereinheit 40, so dass bei einem Überschreiten einer vorgegebenen Geschwindigkeit, beispielsweise 15 km/h, das Parklenkassistenzsystem 30 deaktiviert werden kann. Es ist ein zusätzlicher Sensor 70 an dem Lenkungssystem 34 angeordnet, mit dem Lenkeingriffe eines Fahrers detektiert werden können. Wird eine Lenkbewegung des Fahrers festgestellt, während das Parklenkassistenzsystem 30 aktiv ist, so wird dieses automatisch deaktiviert.

Wird das Kraftfahrzeug 1 ausgeparkt, so ermittelt das Abstandsermittlungssystem 56 einen seitlichen Hindernisabstand d_{sH}. In der dargestellten Ausführungsform umfasst das Abstandsermittlungssystem seitliche Abstandssensoren 74, die seitlich an dem Kraftfahrzeug 1 angeordnet sind. Vorzugsweise sind diese seitlichen Abstandssensoren in einem hinteren Bereich des Kraftfahrzeugs 1 angeordnet. Um auch flache seitliche Hindernisse, beispielsweise einen Bordstein, zuverlässig erfassen zu können, können mehrere der seitlichen Sensoren 47 auf verschiedenen Höhen über einer Fahrbahn an jeder Seite des Kraftfahrzeugs 1 angeordnet sein. Bei anderen Ausführungsformen kann das Abstandsermittlungssystem 56 einen Speicher 72 umfassen, in dem Abstandsdaten, die mittels der Sensoren 27, die an der Vorder- und der Rückseite des Kraftfahrzeugs angeordnet sind, bei einem Einparkvorgang erfasst worden sind. Diese können ausgewertet werden, um den seitlichen Hindernisabstand d_{sH} hieraus für einen nachfolgenden Ausparkvorgang zu ermitteln. Ebenso ist es möglich, dass das Abstandsermittlungssystem 56 ausgebildet ist, den seitlichen Hindernisabstand d_{sH} zu schätzen, wobei beispielsweise statistische Daten ausgewertet werden können.

Die Steuereinheit 40 ist so ausgebildet, dass sie anhand des ermittelten hinteren Hindernisabstands d_{hH} und einer hinteren Sicherheitsmarge d_{hS} einen nutzbaren Hindernisabstand d_{N} ermitteln kann. Ferner ist die Steuereinrichtung 40 so ausgebildet, dass sie einen Lenkweg d_{L} ausgehend von dem seitlichen Hindernisabstand d_{sH} bestimmen kann. Die Bestimmung des Lenkwegs d_{L} kann anhand einer Parametrisierung der oberen Kurve 12 nach Fig. 3 berechnet werden oder anhand einer in einem Speicher abgelegten Tabelle ermittelt werden, in der zu unterschiedlichen seitlichen Hindernisabständen d_{sH} entsprechende Lenkwege d_{L} angegeben sind. Eine Verwendung einer Parametrisierung der oberen Kurve 12 kann vorzugsweise noch so modifiziert werden, dass eine durch den Aktor 38 ausführbare Einlenkgeschwindigkeit und eine Fahrzeuggeschwindigkeit während des Durchlaufens der Parallelfahrstrecke d_{P} mitberücksichtigt werden, um den Lenkweg d_{L} zu ermitteln. In der Regel wird die Rückwärtsfahrt beim ersten Ausparkzug jedoch so langsam ausgeführt, dass die Modifikation, die durch ein Berücksichtigen der endlichen Fahrzeuggeschwindigkeit und der endlichen Einlenkgeschwindigkeit verursacht sind, vernachlässigt werden können. Sobald der erste Ausparkzug abgeschlossen ist, fordert das Parklenkassistenzsystem den Fahrer auf, den Fahrtrichtungswahlhebel 54 in die Stellung "D" für eine Vorwärtsfahrt zu bewegen. Daraufhin werden die lenkbaren Fahrzeugräder 15 maximal in Ausparkrichtung ausgelenkt. Bei einer Ausführungsform kann vorgesehen sein, dass das Ausführen der Lenkbewegung nur bei aktivierter Fahrzeugbremse ausgeführt wird. Hierdurch wird sichergestellt, dass der in der Parklücke 2 verfügbare Raum optimal ausgenutzt wird. Bei einer solchen Ausführungsform kann vorgesehen sein, dass der Fahrer aufgefordert wird, das Fahrzeug am Ende der Parallelfahrstrecke d_{P} beim ersten Rückwärtsfahrzug zum Stehen zu bringen, so dass das Einlenken der Fahrzeugräder entgegen der Ausparkrichtung ebenfalls bei aktivierter Bremse stattfindet, bevor der Rückwärtsfahrzug zum Zurücklegen des Lenkwegs d_{L} ausgeführt wird. Der Rangiervorgang wird nun mit abwechselnd aufeinander folgenden Vorwärts- und Rückwärtsausparkzügen fortgesetzt. Bei einer Bewegung des Kraftfahrzeugs in Vorwärtsrichtung sind die lenkbaren Räder 15 maximal in Ausparkrichtung, d. h. zur Fahrbahn hin, eingelenkt. Bei Rückwärtsausparkzügen sind die lenkbaren Räder entgegen der Ausparkrichtung, d.h. zu dem seitlichen Hindernis hin, maximal eingelenkt.

Hat die Steuereinheit 40 ermittelt, dass das Fahrzeug in Vorwärtsfahrtrichtung aus der Parklücke herausgefahren werden kann, ohne einen weiteren Ausparkzug vorzunehmen, so werden die lenkbaren Fahrzeugräder vorzugsweise in Geradeausfahrstellung bewegt und das Parklenkassistenzsystem deaktiviert.

Während des Ausparkvorgangs wird eine Stellung der lenkbaren Räder 15 vorzugsweise mittels der Ausgabeeinheit 60, beispielsweise wie in den Fig. 6-10 dargestellt, angezeigt.

Der Aktor, die Ausgabeeinheit, die Abstandsermittlungseinheit sowie die Sensoren und Schalter sind in der beschriebenen Ausführungsform als selbstständige Einheiten des Kraftfahrzeugs beschrieben. Die Schalter können in Steuergeräte integriert sein, die über das Fahrzeugbussystem mit der Steuereinheit verbunden sind. Ebenso können andere Erfassungsmittel genutzt werden. Es gibt jedoch auch Ausführungsformen, bei denen diese Komponenten alle oder teilweise in beliebiger Kombination integrale Bestandteile des Parklenkassistenzsystems sind. Hierbei ist es unerheblich, dass einzelne Komponenten an unterschiedlichen Orten im Kraftfahrzeug angeordnet sind.

Die einzelnen Bestandteile des Parklenkassistenzsystems können ganz oder teilweise in Hard- und/oder Software ausgeführt sein und zumindest teilweise in ein Steuergerät mit einem programmierbaren Rechner integriert sein.

Die oben aufgeführten Beispiele beschreiben ein Ausparken eines Kraftfahrzeuges aus einer Parklücke am rechten Fahrbahnrand. Selbstverständlich gilt analog dasselbe für das Ausparken in eine Parklücke am linken Fahrbahnrand.

### Bezugszeichenliste

- 1: Kraftfahrzeug
- 2: Parklücke
- 3: Fahrbahn
- 4: vorderes Hindernis
- 5: hinteres Hindernis
- 6: seitliches Hindernis
- d_{hH}: hinterer Hindernisabstand
- d_{hS}: hintere Sicherheitsmarge
- d_{N}: nutzbarer Hindernisabstand
- d_{sH}: seitlicher Hindernisabstand
- 7: Fahrschlauch
- 8: Pfeil
- 9: hintere, von der Fahrbahn abgewandte Ecke des Kraftfahrzeugs
- 10: Fahrzeuglängsachse
- α: Ausrichtungswinkel
- 11: seitliche Begrenzung
- d_{L}: Lenkweg
- 12: obere Kurve (Lenkweg)
- 13: untere Kurve (Ausrichtungswinkel)
- d_{P}: Parallelfahrstrecke
- 14: andere Ecke (hintere, der Fahrbahnseite zugewandte Ecke des Kraftfahrzeugs)
- 15: lenkbare Räder
- 16: Parklenkassistentensymbol
- 17: Warnnachricht
- 18: Vorderteil des Kraftfahrzeugs
- 25: vorderes Ende des Kraftfahrzeugs
- 26: hinters Ende des Kraftfahrzeugs
- 27: Abstandssensoren
- 28: Fahrbahn
- 30: Parklenkassistenzsystem
- 32: Hinterräder
- 34: Lenkungssystem
- 36: Lenkrad
- 38: Aktor
- 40: Steuereinheit
- 42: Mittel zum Erfassen eines Aktivierungssignals
- 43: Eingang der Mittel zum Erfassen eines Aktivierungssignals
- 44: Ausgang der Mittel zum Erfassen eines Aktivierungssignals
- 45: Schalter
- 46: Blinkerhebel
- 47: Mittel zum Ermitteln der Ausparkrichtung
- 48: weitere Ausgang (der Mittel zum Ermitteln der Änderungsrichtung)
- 49: weitere Eingänge (der Mittel zum Ermitteln der Änderungsrichtung)
- 50: Mittel zum Erfassen einer eingestellten Antriebsrichtung
- 52: Sensor am Wahlhebel eines Getriebes
- 54: Wahlhebel eines Getriebes
- 56: Abstandsermittlungssystem
- 60: Ausgabeeinheit
- 62: Fahrzeugbussystem
- 64: Bremsanlage
- 66: Vergleicher
- 68: Radimpulssensor
- 70: zusätzlicher Sensor am Lenkungssystem
- 72: Speicher
- 74: seitliche Abstandssensoren

## Patentansprüche

1. Parklenkassistenzsystem (30) für ein Kraftfahrzeug (1) zum Unterstützen eines Ausparkvorgangs aus einer parallel zu einer Fahrbahn (3) orientierten Parklücke (2), umfassend:
Mittel (42) zum Erfassen einer Systemaktivierung;
Mittel (47) zum Ermitteln einer beabsichtigten Ausparkrichtung;
Mittel (50) zum Erfassen einer eingestellten Fahrtrichtung;
eine Steuereinheit (40) zum Ansteuern mindestens eines Aktors (38), in Abhängigkeit von der eingestellten Fahrtrichtung, wobei mit dem Aktor (38) ein Lenkwinkel lenkbarer Räder (15) des Kraftfahrzeugs (1) einstellbar ist,
mindestens ein Abstandsermittlungssystem (56), mit dem ein hinterer Hindernisabstand (d_{hH}) zu einem die Parklücke (2) in Rückwärtsfahrtrichtung begrenzenden hinteren Hindernis (5) messbar ist,
wobei
mittels des mindestes einen Abstandsermittlungssystems (56) oder eines weiteren Abstandsermittlungssystems ein seitlicher Hindernisabstand (d_{sH}) zu einem die Parklücke (2) auf einer der Fahrbahn (3) abgewandten Seite begrenzenden seitlichen Hindernis (6) ermittelbar ist,
**dadurch gekennzeichnet, dass**
die Steuereinheit (40) ausgebildet ist, bei einem ersten Ausparkzug, sofern dieser in Rückwärtsfahrtrichtung ausgeführt wird, den Aktor (38) so anzusteuern, dass die lenkbaren Räder (15) zunächst für eine Parallelfahrt zu der Fahrbahn (3) ausgerichtet sind, falls und solange der hintere Hindernisabstand (d_{hH}) unter Berücksichtigung einer hinteren Sicherheitsmarge (d_{hS}) länger als ein Lenkweg (d_{L}) ist, und anschließend oder ansonsten eine maximale Einlenkung der lenkbaren Räder (15) entgegen der Ausparkrichtung zu bewirken, wobei der Lenkweg (d_{L}) der unter Berücksichtigung des seitlichen Hindernisabstands (d_{sH}) gegebenenfalls unter Berücksichtigung einer seitlichen Sicherheitsmarge (d_{sS}) bei Bewirkung der maximalen Einlenkung gegen die Ausparkrichtung zurücklegbare Abstand parallel zur Fahrbahn (3) ist.

2. Parklenkassistenzsystem (30) nach Anspruch 1, **dadurch gekennzeichnet, dass** das Abstandsermittlungssystem (56) einen Speicher (72) umfasst, in dem Abstandsdaten, die bei einem Einparkvorgang erhoben werden, abspeicherbar sind, und der seitliche Hindernisabstand (d_{sH}) anhand der bei einem vorausgegangenen Einparkvorgang erhobenen und in dem Speicher (72) abgelegten Abstandsdaten ermittelt wird.

3. Parklenkassistenzsystem (30) nach einem der vorangehenden Ansprüche, **dadurch gekennzeichnet, dass** das Abstandsermittlungssystem (56) ausgebildet ist, den seitlichen Hindernisabstand (d_{sH}) anhand statistischer Abstandsdaten zu schätzen.

4. Parklenkassistenzsystem (30) nach einem der vorangehenden Ansprüche, **dadurch gekennzeichnet, dass** die Mittel zum Erfassen des Aktivierungssignals ein Bedienelement zum Aktivieren eines Einparkassistenzsystems umfasst.

5. Parklenkassistenzsystem (30) nach einem der vorangehenden Ansprüche, **dadurch gekennzeichnet, dass** die Mittel zum Erfassen der Ausparkrichtung eine Korrelation eines bei einer Betätigung eines Bedienelements zum Aktivieren des Parklenkassistenzsystems (30) erfassten Signal und eines bei einer Betätigung eines Blinkerbedienelements erfassten Blinkrichtungssignals auswertet und die Ausparkrichtung anhand des Blinkrichtungssignals ermittelt.

6. Parklenkassistenzsystem (30) nach einem der vorangehenden Ansprüche, **dadurch gekennzeichnet, dass** eine Blinkfunktion unabhängig von einer Lenkungsstellung während eines Ausparkvorgangs bis zum Erreichen einer Abbruchsbedingung aufrechterhalten wird.

7. Parklenkassistenzsystem (30) nach einem der vorangehenden Ansprüche, **dadurch gekennzeichnet, dass** seitlich an dem Kraftfahrzeug (1) ein oder mehrere seitliche Abstandssensoren (74) zum Erfassen des seitlichen Hindernisabstands (d_{sH}) angeordnet sind.

8. Parklenkassistenzsystem (30) nach einem der vorangehenden Ansprüche, **dadurch gekennzeichnet, dass** mit der Steuereinheit (40) eine Anzeige gekoppelt ist, auf der eine Lenkstellung der Räder (15) grafisch dargestellt ist.

9. Verfahren zum Unterstützen eines Ausparkvorgangs eines Kraftfahrzeug (1) mittels eines Parklenkassistenzsystems (30) aus einer parallel zu einer Fahrbahn (3) orientierten Parklücke (2),
Erfassen einer Aktivierung des Parklenkassistenzsystems (30);
Ermitteln einer Ausparkrichtung;
Erfassen einer eingestellten Antriebsrichtung,
Messen eines hinteren Hindernisabstands (d_{hH}) zu einem die Parklücke (2) in Rückwärtsfahrtrichtung begrenzenden hinteren Hindernis (5),
Ansteuern mindestens eines Aktors (38) zum Einstellen eines Lenkwinkels lenkbarer Räder (15) des Kraftfahrzeugs (1) abhängig von der eingestellten Fahrtrichtung,
wobei
ein seitlicher Hindernisabstand (d_{sH}) zu einem die Parklücke (2) auf einer der Fahrbahn (3) abgewandten Seite begrenzenden seitlichen Hindernis (6) ermittelt wird,
**dadurch gekennzeichnet, dass**
ein Lenkweg (d_{L}) bestimmt wird, der ein unter Berücksichtigung des seitlichen Hindernisabstands (d_{sH}) gegebenenfalls unter Berücksichtigung einer seitlichen Sicherheitsmarge (d_{sS}) bei Bewirkung einer maximalen Einlenkung gegen die Ausparkrichtung zurücklegbarer Abstand parallel zur Fahrbahn ist, und bei einem ersten Ausparkzug, sofern dieser in Rückwärtsfahrtrichtung ausgeführt wird, der mindestens eine Aktor (38) angesteuert wird, die lenkbaren Räder (15) zunächst für eine Parallelfahrt parallel zu der Fahrbahn (3) auszurichten, falls und solange der hintere Hindernisabstand (d_{hH}) unter Berücksichtigung einer hinteren Sicherheitsmarge (d_{hS}) länger als der Lenkweg (d_{L}) ist, und anschließend oder ansonsten eine maximale Einlenkung der lenkbaren Räder (18) entgegen der Ausparkrichtung bewirkt wird.

10. Verfahren nach Anspruch 9, **dadurch gekennzeichnet, dass** während eines Einparkvorgangs Abstandsdaten erfasst und in einem Speicher (72) abgespeichert werden und der seitliche Hindernisabstand (d_{sH}) anhand der bei einem vorausgegangenen Einparkvorgang erhobenen und in dem Speicher (72) abgelegten Abstandsdaten ermittelt wird.

11. Verfahren nach einem der Ansprüche 9 oder 10, **dadurch gekennzeichnet, dass** das Ermitteln des seitlichen Hindernisabstands (d_{sH}) mittels eines Schätzens anhand statistischer Abstandsdaten erfolgt.

12. Verfahren nach einem der Ansprüche 9 bis 11, **dadurch gekennzeichnet, dass** die Aktivierung des Parklenkassistenzsystems (30) mittels eines Bedienelements zum Aktivieren eines Einparkassistenzsystems erfasst wird.

13. Verfahren nach einem der Ansprüche 9 bis 12, **dadurch gekennzeichnet, dass** die Ausparkrichtung anhand einer Korrelation eines bei einer Betätigung eines Bedienelements zum Aktivieren des Parklenkassistenzsystems (30) erfassten Signals und eines bei einer Betätigung eines Blinkerbedienelements erfassten Blinkrichtungssignals ermittelt wird.

14. Verfahren nach einem der Ansprüche 9 bis 13, **dadurch gekennzeichnet, dass** eine Blinkfunktion unabhängig von einer Lenkungsstellung während eines Ausparkvorgangs bis zum Erreichen einer Abbruchsbedingung aufrechterhalten wird.

15. Verfahren nach einem der Ansprüche 9 bis 14, **dadurch gekennzeichnet, dass** mittels eines oder mehreren seitlicher Abstandssensoren (74), die seitlich von dem Kraftfahrzeug (1) angeordnet sind, der seitliche Hindernisabstand (d_{sH}) gemessen wird.

## Claims

1. Parking steering assistance system (30) for a motor vehicle (1) for assisting the process of driving out of a parking space (2) which is oriented parallel to a carriageway (3), comprising:
means (42) for detecting activation of the system;
means (47) for detecting an intended direction for driving out of a parking space;
means (50) for detecting a set direction of travel; and a control unit (40) for actuating at least one actuator (38) as a function of the set direction of travel, wherein a steering angle of steerable wheels (15) of the motor vehicle (1) can be set with the actuator (38),
at least one distance-determining system (56) with which a rear obstacle distance (d_{hH}) from a rear obstacle (5) which bounds the parking space (2) in the direction of reverse travel can be measured,
wherein
a lateral obstacle distance (d_{sH}) from a lateral obstacle (6) which bounds the parking space (2) on a side facing away from the carriageway (3) can be detected by means of the at least one distance-detection system (56) or a further distance-detection system, **characterized in that** the control unit (40) is designed to actuate the actuator (38) during a first movement for driving out of a parking space, in so far as said movement is carried out in the direction of reverse travel, in such a way that the steerable wheels (15) are first aligned for travel parallel to the carriageway (3), if and for as long as the rear obstacle distance (d_{hH}) is longer than a steering path (d_{L}) taking into account a rear safety margin (d_{hS}), and subsequently or otherwise to bring about maximum deflection of the steerable wheels (15) counter to the direction of driving out of a parking space, wherein the steering path (d_{L}) is the distance parallel to the carriageway (3) which can be travelled along taking into account the lateral obstacle distance (d_{sE}), if appropriate taking into account a lateral safety margin (d_{sS}) when the maximum deflection counter to the direction of driving out of a parking space is implemented.

2. Parking steering assistance system (30) according to Claim 1, **characterized in that** the distance-determining system (56) comprises a memory (72) in which distance data which are acquired during a parking process can be stored, and the lateral obstacle distance (d_{sH}) is determined on the basis of the distance data which are acquired during a preceding parking process and stored in the memory (72).

3. Parking steering assistance system (30) according to one of the preceding claims, **characterized in that** the distance-determining system (56) is designed to estimate the lateral obstacle distance (d_{sH}) on the basis of statistical distance data.

4. Parking steering assistance system (30) according to one of the preceding claims, **characterized in that** the means for detecting the activation signal comprise an operator control element for activating a parking assistance system.

5. Parking steering assistance system (30) according to one of the preceding claims, **characterized in that** the means for detecting the direction of driving out of a parking space evaluates a correlation of a signal detected during activation of an operator control element for the activation of the parking steering assistance system (30), and of a direction indicator signal which is detected when a direction indicator control element is actuated, and said means detects the direction of driving out of a parking space on the basis of the direction indicator signal.

6. Parking steering assistance system (30) according to one of the preceding claims, **characterized in that** a direction indicting function is maintained independently of a steering position during a process of driving out of a parking space, until an abort condition is reached.

7. Parking steering assistance system (30) according to one of the preceding claims, **characterized in that** one or more lateral distance sensors (74) for detecting the lateral obstacle distance (d_{sH}) are arranged on the side of the motor vehicle (1).

8. Parking steering assistance system (30) according to one of the preceding claims, **characterized in that** a display on which a steering position of the wheels (15) is graphically illustrated is coupled to the control unit (40).

9. Method for assisting a process of driving a motor vehicle (1) out of a parking space (2) which is oriented parallel to a carriageway (3), by means of a parking steering assistance system (30),
detection of activation of the parking steering assistance system (30);
detection of a direction of driving out of a parking space;
detection of a set direction of travel,
measurement of a rear obstacle distance (d_{hH}) from a rear obstacle (5) which bounds the parking space (2) in the direction of reverse travel,
actuation of at least an actuator (38) for the setting of a steering angle of steerable wheels (15) of the motor vehicle (1) as a function of the set direction of travel,
wherein
a lateral obstacle distance (d_{sH}) from a lateral obstacle (6) which bounds the parking space (2) on a side facing away from the carriageway (3) is detected, **characterized in that** a steering path (d_{L}) is determined which is a distance parallel to the carriageway which can be travelled along taking into account the lateral obstacle distance (d_{sH}), and if appropriate taking into account a lateral safety margin (d_{sS}) when a maximum deflection counter to the direction of driving out of a parking space is implemented, and the at least one actuator (38) is actuated during a first movement for driving out of a parking space, in so far as said movement is carried out in the direction of reverse travel, the steerable wheels (15) are firstly to be oriented for travel parallel to the carriageway (3) if and for as long as the rear obstacle distance (d_{hH}) is longer than the steering path (d_{L}) taking into account a rear safety margin (d_{hS}), and then or otherwise a maximum deflection of the steerable wheels (18) counter to the direction of driving out of the parking space is implemented.

10. Method according to Claim 9, **characterized in that** during a parking process, distance data are acquired and stored in a memory (72), and the lateral obstacle distance (d_{sH}) is detected on the basis of the distance data which are acquired during a preceding parking process and are stored in the memory (72).

11. Method according to one of Claims 9 or 10, **characterized in that** the lateral obstacle distance (d_{sH}) is detected by means of estimation on the basis of statistical distance data.

12. Method according to one of Claims 9 to 11, **characterized in that** the activation of the parking steering assistance system (30) is detected by means of an operator control element for activating a parking assistance system.

13. Method according to one of Claims 9 to 12, **characterized in that** the direction for driving out of a parking space is determined on the basis of a correlation of a signal which is detected when an operator control element is actuated in order to activate the parking steering assistance system (30), and of a direction indictor signal which is detected when a direction indicator operator control element is actuated.

14. Method according to one of Claims 9 to 13, **characterized in that** a direction indictor function is maintained independently of a steering position during a process of driving out a parking space, until an abort condition is reached.

15. Method according to one of Claims 9 to 14, **characterized in that** the lateral obstacle distance (d_{sH}) is measure by means of one or more lateral distance sensors (74) which are arranged to the side of the motor vehicle (1).

## Revendications

1. Système d'assistance de direction en stationnement (30) pour un véhicule automobile (1) destiné à assister une manoeuvre de sortie de stationnement depuis un emplacement de stationnement (2) orienté parallèlement à une voie de circulation (3), comprenant :
des moyens (42) pour détecter une activation du système ;
des moyens (47) pour déterminer une direction envisagée de sortie du stationnement ;
des moyens (50) pour détecter un sens de déplacement réglé;
une unité de commande (40) pour commander au moins un actionneur (38) en fonction du sens de déplacement réglé, un angle de direction de roues orientables (15) du véhicule automobile (1) pouvant être réglé avec l'actionneur (38) ;
au moins un système de détermination de l'écart (56), lequel permet de mesurer un écart d'obstacle arrière (d_{hH}) par rapport à un obstacle arrière (5) qui délimite l'emplacement de stationnement (2) dans le sens de la marche arrière,
un écart d'obstacle latéral (d_{sH}) par rapport à un obstacle latéral (6) qui délimite l'emplacement de stationnement (2) d'un côté à l'opposé de la voie de circulation (3) pouvant être déterminé au moyen de l'au moins un système de détermination de l'écart (56) ou d'un système de détermination de l'écart supplémentaire, **caractérisé en ce que** l'unité de commande (40) est configurée, lors d'une première sortie de stationnement, sous réserve que celle-ci soit exécutée dans le sens de la marche arrière, pour commander l'actionneur (38) de telle sorte que les roues orientables (15) sont tout d'abord orientées pour un déplacement en parallèle de la voie de circulation (3) si et tant que l'écart d'obstacle arrière (d_{hH}), en tenant compte d'une marge de sécurité arrière (d_{hS}), est plus long qu'un trajet de changement de direction (d_{L}) et ensuite ou sinon pour provoquer un braquage maximum des roues orientables (15) dans la direction opposée au sens de sortie de stationnement, le trajet de changement de direction (d_{L}) de l'écart qui peut être parcouru en tenant compte de l'écart d'obstacle latéral (d_{sH}), le cas échéant en tenant compte d'une marge de sécurité latérale (d_{sS}) lors de l'application du braquage maximum dans la direction opposée au sens de sortie de stationnement, étant parallèle à la voie de circulation (3).

2. Système d'assistance de direction en stationnement (30) selon la revendication 1, **caractérisé en ce que** le système de détermination de l'écart (56) comprend une mémoire (72) dans laquelle peuvent être mémorisées les données d'écart qui sont relevées lors d'une manoeuvre d'entrée en stationnement et l'écart d'obstacle latéral (d_{sH}) est déterminé au moyen des données d'écart relevées lors d'une manoeuvre d'entrée en stationnement précédente et stockées dans la mémoire (72).

3. Système d'assistance de direction en stationnement (30) selon l'une des revendications précédentes, **caractérisé en ce que** le système de détermination de l'écart (56) est configuré pour estimer l'écart d'obstacle latéral (d_{sH}) au moyen de données d'écart statistiques.

4. Système d'assistance de direction en stationnement (30) selon l'une des revendications précédentes, **caractérisé en ce que** les moyens de détection du signal d'activation comprennent un élément de commande pour activer un système d'assistance d'entrée en stationnement.

5. Système d'assistance de direction en stationnement (30) selon l'une des revendications précédentes, **caractérisé en ce que** les moyens de détection de la direction de sortie du stationnement interprètent une corrélation entre un signal détecté lors d'un actionnement d'un élément de commande pour activer le système d'assistance de direction en stationnement (30) et un signal de direction du clignotant détecté lors d'un actionnement d'un élément de commande de clignotant, et déterminent la direction de sortie du stationnement au moyen du signal de direction du clignotant.

6. Système d'assistance de direction en stationnement (30) selon l'une des revendications précédentes, **caractérisé en ce qu'**une fonction de clignotant est maintenue indépendamment d'une position de la direction pendant une manoeuvre de sortie de stationnement jusqu'à ce qu'une condition d'interruption soit atteinte.

7. Système d'assistance de direction en stationnement (30) selon l'une des revendications précédentes, **caractérisé en ce qu'**un ou plusieurs détecteurs d'écart (74) sont disposés latéralement sur le véhicule automobile (1) pour détecter l'écart d'obstacle latéral (d_{sH}).

8. Système d'assistance de direction en stationnement (30) selon l'une des revendications précédentes, **caractérisé en ce qu'**à l'unité de commande (40) est connecté un afficheur sur lequel est représentée sous forme graphique une position de changement de direction des roues (15).

9. Procédé pour assister une manoeuvre de sortie de stationnement d'un véhicule automobile (1) au moyen d'un système d'assistance de direction en stationnement (30) depuis un emplacement de stationnement (2) orienté parallèlement à une voie de circulation (3),
détecter une activation du système d'assistance de direction en stationnement (30),
déterminer une direction de sortie du stationnement, détecter un sens d'entraînement réglé,
mesurer un écart d'obstacle arrière (d_{hH}) par rapport à un obstacle arrière (5) qui délimite l'emplacement de stationnement (2) dans le sens de la marche arrière, commander au moins un actionneur (38) pour régler un angle de direction de roues orientables (15) du véhicule automobile (1) en fonction du sens de déplacement réglé,
un écart d'obstacle latéral (d_{sH}) par rapport à un obstacle latéral (6) qui délimite l'emplacement de stationnement (2) d'un côté à l'opposé de la voie de circulation (3) étant déterminé, **caractérisé en ce qu'**un trajet de changement de direction (d_{L}) est déterminé, lequel est un écart qui peut être parcouru parallèlement à la voie de circulation en tenant compte de l'écart d'obstacle latéral (d_{sH}), le cas échéant en tenant compte d'une marge de sécurité latérale (d_{sS}) lors de l'application d'un braquage maximum dans la direction opposée au sens de sortie de stationnement, et lors d'une première manoeuvre de sortie de stationnement, sous réserve que celle-ci soit exécutée dans le sens de la marche arrière, l'au moins un actionneur (38) est commandé pour orienter tout d'abord les roues orientables (15) pour un déplacement en parallèle de la voie de circulation (3) si et tant que l'écart d'obstacle arrière (d_{hH}), en tenant compte d'une marge de sécurité arrière (d_{hS}), est plus long que le trajet de changement de direction (d_{L}) et ensuite ou sinon un braquage maximum des roues orientables (15) dans la direction opposée au sens de sortie de stationnement est provoqué.

10. Procédé selon la revendication 9, **caractérisé en ce que** pendant une manoeuvre d'entrée en stationnement, des données d'écart sont détectées et enregistrées dans une mémoire (72) et l'écart d'obstacle latéral (d_{sH}) est déterminé au moyen des données d'écart relevées lors d'une manoeuvre d'entrée en stationnement précédente et stockées dans la mémoire (72).

11. Procédé selon l'une des revendications 9 ou 10, **caractérisé en ce que** la détermination de l'écart d'obstacle latéral (d_{sH}) s'effectue par estimation au moyen de données d'écart statistiques.

12. Procédé selon l'une des revendications 9 à 11, **caractérisé en ce que** l'activation du système d'assistance de direction en stationnement (30) est détectée au moyen d'un élément de commande pour activer un système d'assistance d'entrée en stationnement.

13. Procédé selon l'une des revendications 9 à 12, **caractérisé en ce que** la direction de sortie du stationnement est déterminée au moyen d'une corrélation entre un signal détecté lors d'un actionnement d'un élément de commande pour activer le système d'assistance de direction en stationnement (30) et un signal de direction du clignotant détecté lors d'un actionnement d'un élément de commande de clignotant.

14. Procédé selon l'une des revendications 9 à 13, **caractérisé en ce qu'**une fonction de clignotant est maintenue indépendamment d'une position de la direction pendant une manoeuvre de sortie de stationnement jusqu'à ce qu'une condition d'interruption soit atteinte.

15. Procédé selon l'une des revendications 9 à 14, **caractérisé en ce que** l'écart d'obstacle latéral (d_{sH}) est mesuré au moyen d'un ou plusieurs détecteurs d'écart (74) latéraux qui sont disposés latéralement sur le véhicule automobile (1).
